Europäisches Patentamt

European Patent Office

Office européen des brevets

(19)

(11) Publication number: **0 030 858**
**B1**

# EUROPEAN PATENT SPECIFICATION

(45) Date of publication of patent specification: **07.09.83**

(21) Application number: **80304503.8**

(22) Date of filing: **12.12.80**

(51) Int. Cl.³: **B 29 D 7/22,** B 29 C 25/00, G 11 B 5/82

(54) **Method and apparatus for fabricating flexible recording discs with improved thermal and hygroscopic stress characteristics.**

(30) Priority: **13.12.79 US 103267**

(43) Date of publication of application:
**24.06.81 Bulletin 81/25**

(45) Publication of the grant of the patent:
**07.09.83 Bulletin 83/36**

(84) Designated Contracting States:
**DE FR GB**

(56) References cited:
**CH - A - 410 379**
**DE - A - 2 342 890**
**GB - A - 1 141 151**
**GB - A - 1 402 598**
**GB - A - 1 416 495**
**US - A - 3 437 510**
**US - A - 3 650 828**
**US - A - 3 761 333**
**US - A - 3 808 079**
**US - A - 4 060 839**
**US - A - 4 122 234**

(73) Proprietor: **DYSAN CORPORATION**
**5440 Patrick Henry Drive**
**Santa Clara California (US)**

(72) Inventor: **James, Richard Negus**
**4911 Kenson Drive**
**San Jose California (US)**

(74) Representative: **Wright, Peter David John et al,**
**R.G.C. Jenkins & Co. 12-15, Fetter Lane**
**London EC4A 1PL (GB)**

Courier Press, Leamington Spa, England.

## Method and apparatus for fabricating flexible recording discs with improved thermal and hygroscopic stress characteristics

Background of the invention

This invention relates to methods and apparatus for fabricating flexible discs, particularly flexible recording discs having a magnetic coating composition on one or both surfaces.

Flexible recording discs, known in the data processing field as "floppy discs" or "diskettes", typically comprise a flexible substrate material provided with a magnetic coating composition on one or both surfaces. Such discs have enjoyed increasing use in the data processing industry for data storage and retrieval. In the past, such discs have been prepared by coating the substrate material in longitudinal web form with the magnetic recording composition, curing the recording composition layer and blanking the discs out from the sheet stock to form the normal annular shape. The thus formed disc is then typically inserted into an enclosure envelope, which is then sealed to prevent removal of the disc from the envelope but to permit rotation of the disc within the envelope by means of conventional floppy disc drives known to those skilled in the art.

A major problem encountered in the use of flexible floppy discs lies in the anisotropic physical properties of the substrate materials employed. It is known that the magnetic recording track density attainable with a floppy disc is limited extensively by the dimensional stability characteristics of the thin substrate material, which is typically fabricated from a thin heat/moisture sensitive polymer film. Stated differently, a narrow track written on a flexible disc at any given time may later change position and shape due to non-uniform substrate expansion or contraction, so that reading of the stored information at a later time will be impaired or completely prevented. This problem is compounded by the fact that during rotation, the flexible disc substrate undergoes deformation due to (a) stress relaxation of built-in stresses from the manufacturing process, (b) changes in temperature and humidity, and (c) centrifugal forces of rotation. No unexpectedly, flexible disc deformation is generally anisotropic.

While attempts have been made to make the hygroscopic and thermal expansion characteristics of the flexible disc substrate material more uniform by pre-annealing of the substrate, efforts to date to provide flexible discs with less unpredictable hygroscopic and thermal expansion characteristics as well as extremely smooth surface flatness, have not met with substantial success.

Summary of the invention

The invention comprises a method and an apparatus for treating a flexible disc provided with a coating composition to produce a finished article having improved thermal and hygroscopic stress and surface flatness properties.

From a method standpoint, the invention broadly comprises the steps of providing a disc blank having a coating composition on one or both surfaces of a flexible substrate, securely clamping the substrate substantially uniformly along the periphery thereof, and permitting the blank to cure to a finished state while maintaining the blank securely clamped. The blank may be prepared by coating a continuous web of substrate material with a suitable magnetic recording composition, allowing the coating to dry, and cutting an annular disc from the coated web; alternatively, the blank may be prepared by spin coating an annular substrate with a suitable magnetic recording composition, and allowing the recording layer to dry.

The coating composition is cured by either permitting the composition to remain at room temperature or, preferably, by placing the coated substrate in a temperature controlled environment, such as an oven, for a predetermined period of time required to cure the coating composition and to stress relieve the substrate material by anisotropic shrinking. For magnetic coating compositions having polymeric ingredients, the minimum cure time period is that required to cross-link the polymers in the coating composition. For flattening the stress relieving, however, the temperature should be above the glass transition point for the substrate material, typically about 72°C. The oven temperature may range anywhere from this point to the temperature at which the substrate material thermally degrades. Thus, the oven temperature may be in the range from about 72°C to about 600°C, curing is improved by providing ventilated clamping members and rotating the clamped discs about an axis perpendicular to the disc plane in order to expose the disc surfaces to uniform ambient temperature.

After heat curing, the clamped discs are allowed to cool at room temperature so that the thermal stresses in the substrate material are stabilized prior to unclamping.

From the apparatus standpoint, a first embodiment of the invention comprises a fixture assembly having a plurality of substantially identical clamping members, each clamping member having at least one flatted peripheral clamping surface adapted to engage one side of the peripheral surface of a disc in a substantially uniform member when the disc is arranged between a pair of clamping members, and means for providing a clamping force in a direction perpendicular to the clamping surfaces. For annular geometries, the clamping members are formed to a diameter substantially identical to that of the discs to be treated, and the ventilation apertures provided in the clamping members extend radially herethrough. Each flatted clamping surface is provided with a thin layer of a low friction material, such as a permanent Teflon (registered trade mark) coating or a mold release agent, to permit the flexible substrate to "creep" during the curing process. The fixture assembly includes a laterally spaced pair of end members flanking the clamping members, with each end member having an inwardly facing thrust surface engaged with a juxtapositioned one of the clamping members, and a tension rod assembly is received through a bore in each one of the end members. The tension rod assembly includes a rod having a first end releasably engaged with one of the end members and a second end provided with a threaded portion; and a tensioning member is coupled to the other one of the end members, with the tensioning member being threadably engaged with the threaded portion of the rod means. A thrust bearing element is preferably coupled between the tensioning member and the other end member.

To aid in the assembly and disassembly of the fixture and the discs, a support stand is provided comprising a pair of laterally spaced end plates and means for coupling the end plates together. The means for coupling the end plates together includes means for providing a support and alignment surface for the individual clamping members and the discs during assembly and disassembly.

The oven is preferably provided with a plurality of rotatable support wheels received within one of a pair of circumferential grooves formed in the fixture assembly in order to provide rotation to the assembled discs during the curing step. For cooling, a similar arrangement is included in the support stand. In both of the rotatable structures, thrust members are preferably included which provide an inwardly directed axial thrust to each end of the fixture assembly to prevent excessive end run out of the fixture assembly during rotation.

In an alternate embodiment of the invention, individual clamping members having the flatted peripheral clamping surfaces are arranged on a moveable table having a loading station and an unloading station, and the table is arranged for movement through a curing station having one or more heat sources. The individual clamping members are coupled to automatically controlled member retracting devices to facilitate loading of pre-cured discs and unloading of cured discs. The heat sources are preferably radiation sources whose radiation is readily absorbed by the disc substrate and the coating composition, such as infra-red heat lamps. The speed with which the discs are moved through the curing station is selected to ensure sufficient curing time at the temperature achieved in the curing station, while ensuring maximum throughput of untreated discs through the installation. One or more feedback sensors are provided at predetermined points within the curing station to enable the curing conditions to be monitored and, if necessary, modified by altering the curing station temperature, the speed of the table, or both. Preferably, each sensor is initially coated with a sample of the magnetic recording composition employed on the discs as a control. In this continuous flow embodiment, the majority of the heat is used to heat the discs and therefore this embodiment is more energy efficient than the batch processing first embodiment.

Flexible recording discs fabricated in accordance with the invention exhibit highly stabilized thermal and hygroscopic stress properties, extremely smooth surface flatness and good durability.

For a fuller understanding of the nature and advantages of the invention, reference should be had to the ensuing detailed description taken in conjunction with the accompanying drawings.

Brief description of the drawings

Fig. 1 is a process flow diagram illustrating the flexible disc manufacturing process according to the invention;

Fig. 2 is a front elevational view of a fixture assembly and stand of the invention;

Fig. 3 is a front elevational view in section similar to Fig. 2 and showing the assembled fixture with discs securely clamped;

Fig. 4 is a top plan view, partially in section, illustrating the assembled fixture in an oven provided with a fixture rotating device;

Fig. 5 is a front elevational view illustrating the assembled fixture on a cooling stand provided with a fixture rotating device;

Fig. 6 is an end elevational view partially in section taken along lines 6—6 of Fig. 5, reduced in size;

Fig. 7 is an enlarged fragmentary sectional view showing the fixture tensioning mechanism;

Fig. 8 is an end view taken along lines 8—8 of Fig. 7;

Fig. 9 is an enlarged partial sectional view of a clamping ring illustrating the low friction edge layers;

Fig. 10 is a schematic top plan view of the continuous flow embodiment of the invention; and

Fig. 11 is a schematic section view taken along lines 11—11 of Fig. 10 illustrating the interior of the curing station.

Description of the preferred embodiments

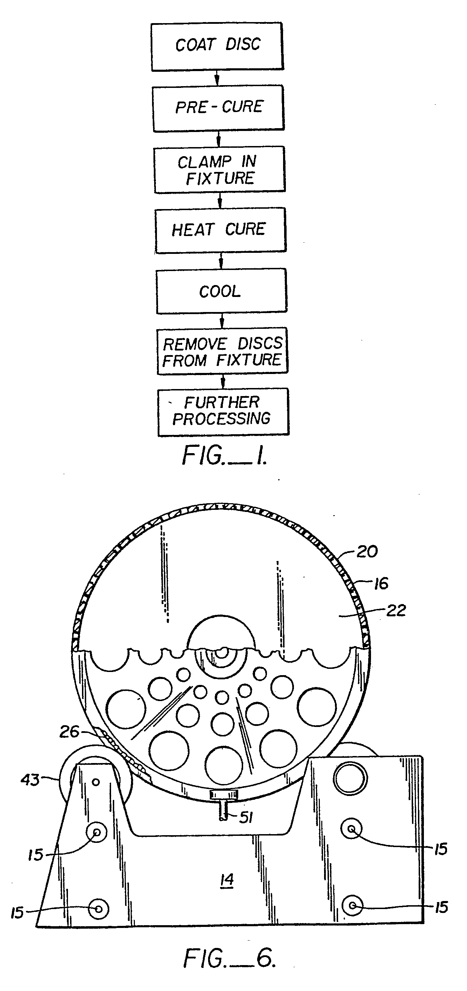

Turning now to the drawings, Fig. 1 illustrates the preferred method of fabricating flexible recording discs in accordance with the invention. As seen in Fig. 1, an oversize disc substrate is first spin or flow coated with a suitable magnetic recording composition on either one or both sides of the substrate; alternatively, a disc is cut oversize from a previously coated web or sheet. After drying the coated composition by air drying, heat forced solvent "flash off", or other suitable known techniques, the coated disc is clamped in a fixture of the type described below, and heat cured for a predetermined time at a proper temperature. After curing, the disc is permitted to cool, and is subsequently removed from the fixture and subjected to further processing, such as edge trimming, insertion into a jacket and the like.

The actual material employed for the fabrication process may vary in accordance with the requirements of any particular application. Suitable substrate materials include a wide variety of heat shrinkable substances, such as polyester based film (e.g., polyethylene terephthalate, polypropylene, polyethylene, polyimide (e.g., that sold under the trademark Kapton), and the like. Other suitable substrate materials will occur to those skilled in the art. The substrate material normally ranges in a thickness from about 0.025 mm to about 0.25 mm (one to about ten mils), the most common being approximately three mils thick.

Many compositions are suitable for providing the magnetic recording layer. Examples of such compositions are the compositions disclosed in the U.S. patents numbers:

| | |
|---|---|
| 3,419,420 | 3,775,178 |
| 3,437,510 | 3,808,079 |
| 3,574,684 | 4,048,375 |
| 3,650,828 | 4,049,871 |
| 3,657,539 | 4,058,646 |
| 3,681,137 | 4,074,012 |
| 3,689,317 | 4,075,384 |
| 3,761,311 | 4,122,234 |

The temperatures and time periods employed for the heat curing portion of the process in Fig. 1 depend upon a number of parameters and characteristics of the coating composition and the substrate material employed. Thus, for example, for a magnetic coating composition having polymeric ingredients, the minimum time period is dependent upon the minimum time required to cross-link the polymers in the recording layer at the temperature selected. The minimum time period is also dependent upon the minimum length of time required to provide the requisite degree of stress relief and thermally induced shrinkage for the particular substrate material.

The environmental temperature range employed with the curing step of the process is primarily dependent upon the speed with which the curing process is desired to be accomplished and also the temperature at which the substrate material begins to break down at the molecular level, i.e. the point at which the material undergoes decomposition or degradation of the physical properties. Temperatures in the range from about 72 °C to about 600 °C are feasible for polyimide films (which are capable of withstanding rather high temperatures). A useful range is from about 72 °C to approximately 250 °C.

The cooling cycle time has a minimum which is dependent upon the time required for the thermal stresses within the disc substrate to stabilize, preferably until the disc reaches room temperature. Typical values are from approximately 30 seconds to one hour.

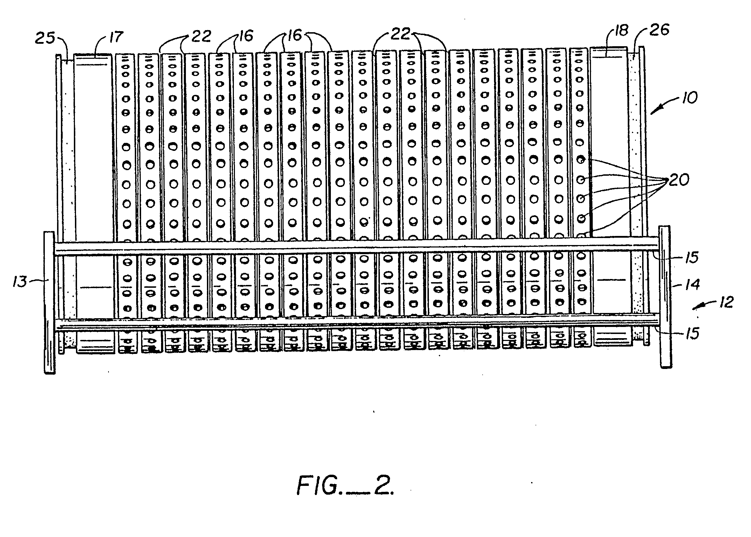

Fig. 2 is a front elevational view of a preferred embodiment of a portion of a fixture assembly 10 and assembly/disassembly stand 12. As seen in this Fig., a support stand, generally designated by reference numeral 12 includes a pair of laterally spaced end plates 13, 14, interconnected by means of strut rods 15, two such rods 15 being visible in Fig. 2 and two being hidden. The rods 15 provide support for a plurality of clamping rings 16 and a pair of end bell members 17, 18. Each clamping ring 16 is provided with a plurality of radially directed ventilation apertures 20 which enable ambient air to freely circulate within the interior volume defined by the clamping rings 16 and the end bell members 17, 18. Clamping rings 16 are preferably fabricated from mild steel which is nickel plated to minimize corrosion. Each clamping ring 16 is provided with a pair of extremely flat vertical edge surfaces as viewed in Fig. 2 (the clamping surfaces), preferably flatted to within a tolerance of 0.025 mm (.001 inch). This surface may be formed in any suitable way known to those skilled in the art, preferably by lapping, milling, chemical etching, or the like.

The extremely flat clamping surfaces are provided for the purpose of ensuring substantially uniform clamping contact between adjacent clamping rings 16 and the interposed flexible discs 22 shown loosely disposed in Fig. 2. This intimate clamping engagement along the entire periphery on both sides of the flexible discs is essential to the fabrication of improved flexible discs according to the invention. The clamping force applied to the disc peripheries may range from about $241.10^3$ to $1380.10^3$ N/m² (35 to 200 p.s.i.), with a value of about $496.10^3$ N/m² (72 p.s.i.) preferred in the embodiment of Figs. 2—9.

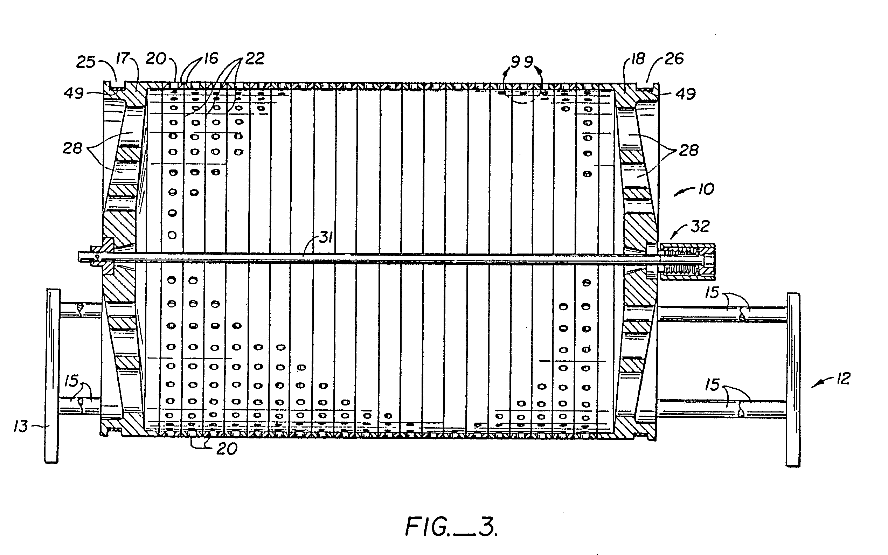

End bell members 17, 18 are substantially identical in construction and are generally cylindrical in shape, with a recessed groove 25 formed peripherally thereof adjacent the outer end, for a purpose to be described. End bell members 17, 18 are provided with ventilation apertures extending along the longitudinal axis of the assembly (see Fig. 3).

Fig. 2 illustrates the first step in the fixture clamping process, namely, the arrangement of the individual clamping rings 16 in the support stand 12, the placement of the individual coated discs 22 in between adjacent clamping rings 16 and placement of the end bell members 17, 18. It is noted that the rods 15 used to connect the side plates 13, 14 of stand 12 are positioned at points on a circle whose diameter is equal to the diameter of the clamping rings and the flexible discs 22 in order to provide both support and alignment for these members during assembly and disassembly.

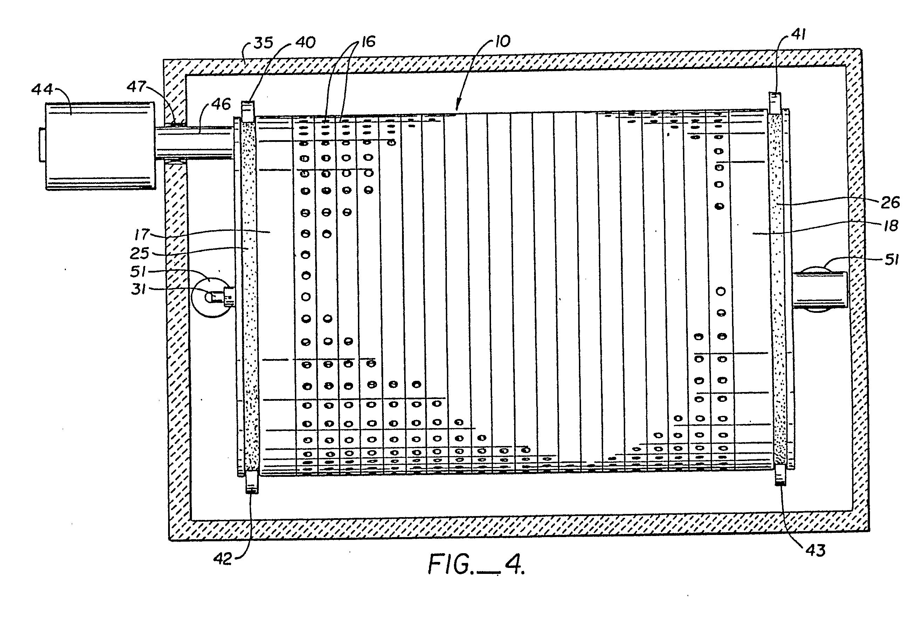

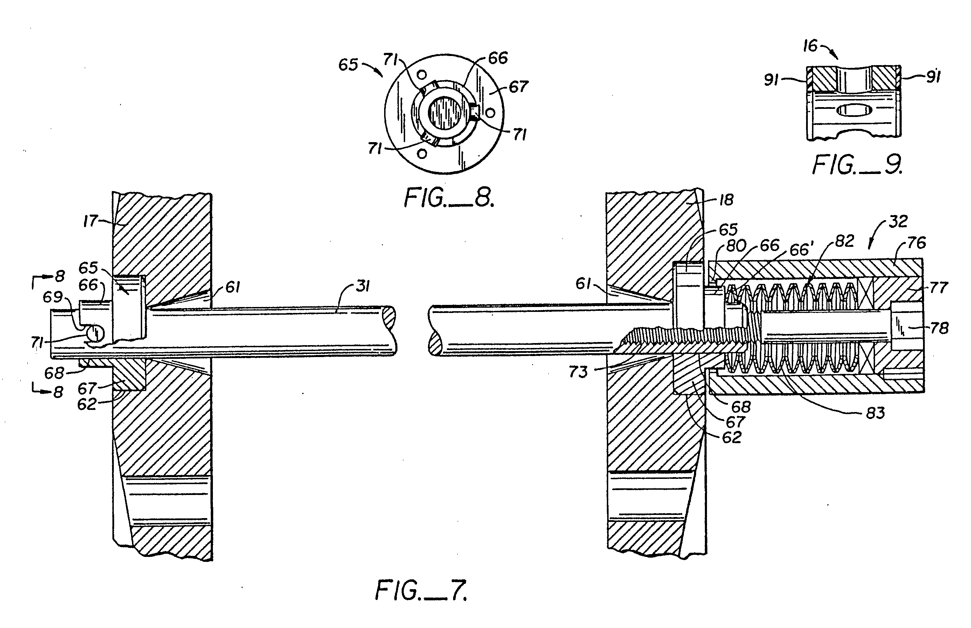

Fig. 3 is a side partial section view illustrating the fixture assembly after the discs have been clamped therein. As seen in this Fig., a tension rod 31 extends longitudinally of the fixture assembly and provides an axially compressive force for the assembly in conjunction with the tensioning elements generally designated by the reference numeral 32, and described in more detail below in connection with Figs. 7 and 8. The rod 31 is inserted from the left hand portion of the assembly as viewed in Fig. 3, is passed through the end bell 18, and the tensioning assembly 32 is thereafter engaged with rod 31 in order to draw the end bell members 17, 18 mutually together, thus clamping securely the peripheral portion of each disc 22 between the flatted clamping surfaces of the flanking clamping rings 16. After assembly of the fixture as shown in Fig. 3, the heat cure step is performed by placing the entire fixture assembly 10 (minus stand 12) in a thermally controlled environment as illustrated in Fig. 4. As seen in this Fig., the fixture assembly 10 is placed within an oven whose boundary walls are generally designated by reference numeral 35 and left in the oven for the requisite period of time. In order to improve the curing process, the oven is provided with a plurality of rotatable support wheels 40—43 which engage grooves 25, 26 in end bell members 17, 18. At least one of the wheels i.e., wheel 40 of Fig. 4, is driven by a motor 44, preferably located externally of the oven walls 35, via a drive shaft 46 mounted in a bearing 47 in an aperture through oven walls 35. In order to improve the rotational motion of the assembly 10, grooves 25, 26 are optionally provided with a friction substance such as an elastic band 49 (see Fig. 3). In addition, a pair of side thrust bearings 51 are mounted at either end of assembly 10 in surface contact with the end surface of each end bell member 17, 18 in order to prevent axial run out during rotation. Thrust bearing elements 51 may be mounted in any suitable fashion and are schematically depicted as mounted for rotation about a vertical axis. The speed of rotation of the fixture assembly 10 does not appear to be critical and excellent results have been obtained at a speed of thirty revolutions per minute. The primary purpose of rotating the fixture assembly 10 is to promote the circulation of ambient heated air through the interior of the fixture assembly 10 to attempt to present a uniform thermal environment to the discs being cured.

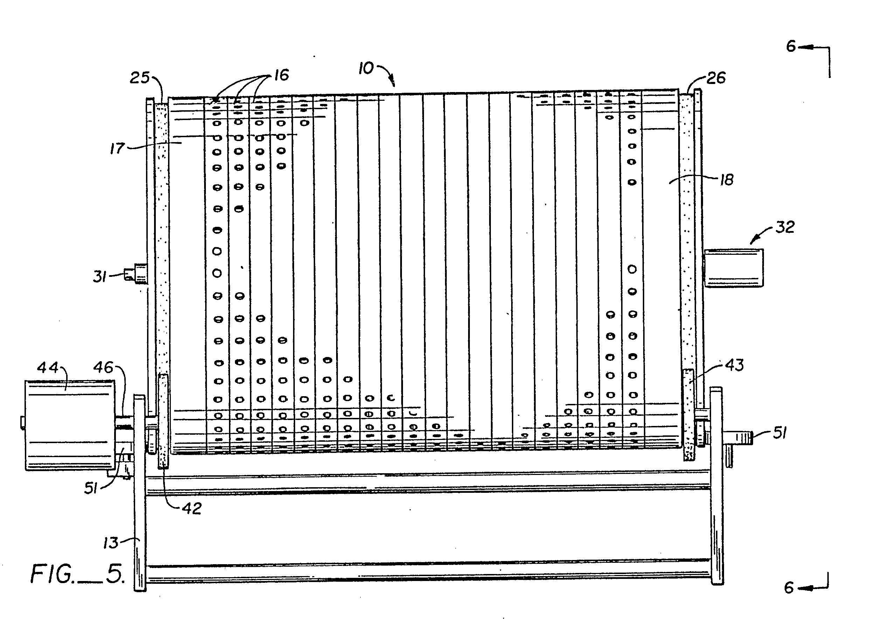

After the curing period has elapsed, the entire fixture assembly is removed from the oven and placed on a cooling stand shown in Figs. 5 and 6. As seen in these Figs., the cooling stand is similar to support and assembly stand 12 and includes end plates 13, 14 and support strut rods 15. In addition, the cooling stand is preferably provided with an assembly rotation capability similar to that included in the oven, including support wheels 40—43, motor 44, drive shaft 46, and end thrust bearings 51. In use, the motor 44 is operated in order to rotate the assembly 10 for the requisite period of time required to cool down the flexible discs 22 to the desired temperature.

After the discs 22 have cooled, the assembly 10 is replaced onto the support stand 12 of Fig. 2, disassembled by separating the tension rod 31 and tensioning elements 32, after which the clamping rings 16 are separated and the discs 22 are removed.

Figs. 7 and 8 illustrated the tension rod 31 and tensioning elements 32. As seen in these Figs., each end bell 17, 18 has a compound central bore with a tapered portion 61 and a counter bored portion 62. Located within the counter bored portion 62 is an insert generally designated by reference numeral 65 and having a cylindrical axial portion 66 and an annular flanged portion 67, with a centrally formed through bore 68. Rod 31 extends through the central throughbore 68 formed in each insert 65.

At the left end as viewed in Fig. 7, rod 31 is provided with three radially extending pins 71 (Fig. 8) each of which is received within an arcuate slot 69 formed in axial portion 66 of insert 65. Pins 71 lock rod 31 against rotation and also provide a tensioning force to end bell member 17 via insert 65.

Mounted at the right end of rod 31, which is internally threaded as indicated by reference numeral 73, are the tensioning elements 32. Tensioning elements 32 include a hollow cylinder 76 into one end of which a cylindrical insert 77 is fitted. Press fitted into insert 77 is a threaded cap screw 78 which is threadably engaged with the adjacent end of rod 31. The inner end of element 76 has an inwardly turned flange portion 80 for retaining a spring element generally designated by reference numeral 82 which preferably comprises a plurality of Belleville washers 83. As shown in Fig. 7, when assembled and tensioned, the outer edge 66 of axial insert portion 66 bears against the spring element 82 for the purpose of compressing this element. As will now be evident, by tightening the tensioning elements 32 on rod 31 a compressive clamping force is provided along the axis of the rod 31, and thus between the end bell members 17, 18 and the clamping rings 16.

With reference to Fig. 9, each clamping ring 16 is preferably provided with a thin layer 91 of a low friction material, such as Teflon, preferably formed to a thickness in the range from about 0.00635 mm (0.00025 in.) to about 0.05 mm (0.002 in.). This layer permits the disc to "creep" during curing in response to changing stresses in the substrate material, and has been found to improve the quality of the finished discs.

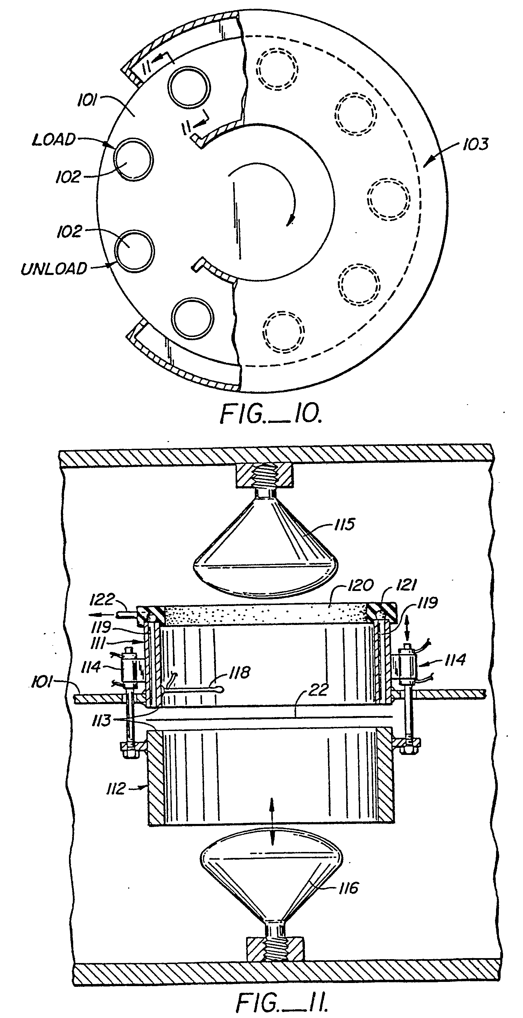

Figs. 10 and and 11 illustrate a continuous flow embodiment of the invention. With reference to Fig. 10, a circular table 101 mounted for rotation about a vertical axis is provided with a plurality of clamping assemblies 102. A curing station 103 partially encloses the table 101 and assemblies 102. In use, the pre-cured discs 22 are individually inserted in serial fashion into a clamping assembly 102 at a loading station, are moved into the curing station 103 and are withdrawn after curing from an unloading station. The table 101 may be either continuously rotated, or indexed in a step-like fashion.

Fig. 11 illustrates a single clamping assembly 102 and the associated radiation sources. As seen in this Fig., the clamping assembly 102 comprises complementary upper and lower members 111, 112, respectively, each provided with an extremely flat clamping surface 113 formed to a flatness substantially identical to that provided for clamping rings 16. In addition, each member 111, 112 is preferably provided with the low friction layer 91 noted above. Either one of members 111, 112 or both are mounted to table 101 by conventional motion translating mechanisms schematically depicted as hydraulic cylinders 114 to permit vertical reciprocation between a closed clamping position and an open position in which discs 22 may be inserted and withdrawn. Preferably, upper member 111 is constructed as a vacuum chuck to facilitate loading of the discs 22. A pair of radiation sources, preferably infra-red lamps 115, 116 as depicted, are mounted above and below the clamping assembly in a position to direct the radiation to the disc surfaces. If desired, sources 115, 116 may be mounted in focussing reflectors, such as a parabolic reflector, to improve the transmission of radiation to the disc. It is understood that a plurality of such sources are distributed within curing station 103.

A feedback sensor 118, preferably coated with a sample of the recording composition, is mounted adjacent the disc 22 to monitor the curing process. Sensor 118 may comprise any one of a number of known temperature sensitive devices, such as a thermistor, capable of generating electrical signals representative of local temperature. If desired, sensor 118 may be coupled to a control device for regulating the radiation output of the sources, such as a power supply, to a table speed regulator, or to both. Such arrangements are well-known to those skilled in the art.

In order to further improve the energy efficiency of the system of Figs. 10 and 11, the inside surfaces of clamping members 111, 112 may be polished or plated with a highly reflective material, such as gold.

As noted *supra*, upper member 111 may be constructed as a vacuum chuck to facilitate loading of the discs 22. To this end, member 111 is provided with longitudinally extending air passages 119 enclosed at the upper end by a manifold 120 having common air passages 121 coupled by means of a conduit 122 to a conventional vacuum source and valve apparatus. If desired, the lower member 112 may be so constructed.

In addition, at least one of members 111, 112 is preferably provided with a registration guide (not illustrated) to facilitate loading of the discs 22 in a centralized fashion. Examples of a suitable guide are pins depending from the outer periphery of upper member 111, an arcuate shield also depending from upper member 111, and the like.

As will be apparent to those skilled in the art, the temperature within the curing station 103 and the speed of table 101 are selected to provide the requisite amount of curing for the discs 22 while ensuring maximum disc throughput. These parameters can be best established in an empirical fashion.

It should be noted that separation of the clamping rings 16 from the peripheral disc surfaces can be facilitated by applying a thin film of a suitable mold release agent to the ring clamping surface prior to tensioning of the fixture assembly 10. Examples of suitable agents are: parting agent 1914A sold by Hasting Plastics of Santa Monica, California; Krylon (registered trade mark) 1348 paintable silicon spray mold release sold by Border, Inc., of Columbus, Ohio; and Premium Silicone spray lubricant sold by Oak Materials Groups of Hoosick Falls, New York. Other suitable release agents will occur to those skilled in the art.

Flexible recording discs fabricated in accordance with the invention exhibit more uniform thermal and hygroscopic stress characteristics and further possess a surface flatness having deviations no greater than about 0.127 mm (.005 inch) dynamic runout as measured in the jacket of the finished disc assembly. As a result, track densities can be increased in such flexible recording discs without sacrificing the integrity of data recorded thereon. The following is an example illustrating process parameters involved in practicing the invention.

A magnetizable particle dispersion was prepared by adding 68.0 parts by weight of $y$-$Fe_2O_3$ to 53.4 parts by weight of cyclohexanone and 51.5 parts by weight of cellosolve acetate. To this blend, 16.3 parts by weight of 60% Epon 1001, 4.8 parts by weight of carbon black, and 0.7 parts by weight of TEN-LO (registered trade mark) 70 (a non-ionic surfactant produced by Nopco Chemical Division) were added; this mixture was then stirred from 1 to 4 hours, and subsequently milled until free from agglomerates. Then 5.0 parts by weight of a 5% ferric acetylacetonate solution, 80 parts by weight of 6% EAB 272-20 CAB solution, 3.7 parts by weight of Lubricin N-1, and 23.0 parts by weight of the triisocyanate mixture were added to the milled mixture. Lastly, 92.0 parts of cyclohexanone were added to adjust the final viscosity to approximate 0.3 to 0.35 Ns/m² (300 to 350 centipoise) at 24°C. The viscosity was measured by a Brookfield viscometer, number 2 spindle at 20 rpm.

The compositions were then spin coated on a Mylar polyester substrate for production of a flexible magnetic memory disc. The disc coating was then pre-cured for approximately 40 seconds at approximately 90°C to drive off the solvents, after which several such pre-cured discs were assembled in fixture 10 and heated in an oven at a temperature of 140°C for a period of 20 minutes. The fixtured discs were then removed, placed on the cooling stand of Figs. 5 and 6 and permitted to cool for approximately 30 minutes. Thereafter, the fixture 10 was dissembled and the cured discs were removed.

While the above provides a complete description of the preferred embodiments of the invention, various modifications, alternate constructions and equivalents may be employed as desired. For example, while a continuous process embodiment has been described with reference to circular geometry, other geometrical configurations may be employed, such as a linear system in which the loading and unloading stations are located at opposite ends of a curing station. Therefore, the above description and illustrations should not be construed as limiting the scope of the invention, which is defined by the appended claims.

**Claims**

1. A method of fabricating a flexible coated disc characterised by the steps of:

a) securely clamping a flexible disc blank (22) substantially uniformly along the periphery thereof, said blank (22) comprising a flexible substrate provided with a coating composition; and
b) permitting said blank (22) to cure to a finished state while maintaining said blank (22) securely clamped.

2. A method as claimed in claim 1 characterised in that said step (a) of securely clamping the blank (22) includes the steps of providing a fixture (10; 102) having a plurality of clamping members (16; 111, 112) each having a flatted clamping surface, inserting said substrate (22) between a pair of said clamping members (16; 111, 112) with the periphery of said substrate (22) aligned with said flatted clamping surface, and applying a clamping force to the assembly comprising said pair of clamping members (16; 111, 112) and said substrate (22).

3. A method as claimed in claim 2 characterised in that said step of providing a fixture (10; 102) includes the step of including a layer (91) of low friction material on said clamping surface.

4. A method as claimed in claim 2 or 3, characterised in that said step (b) of permitting said blank (22) to cure includes the step of placing said substrate (22) in a temperature controlled environment for a predetermined period of time to cure said coating composition.

5. A method as claimed in claim 4 characterised in that said coating composition comprises a polymeric mixture, and in that said time period has a minimum duration equal to that minimum time required to cross-link the polymers in said coating composition.

6. A method as claimed in claim 4 or 5 characterised in that said step (b) of permitting said blank (22) to cure includes the step of rotating said substrate (22) in said temperature controlled environment at a predetermined rate.

7. A method as claimed in claim 5 or 6 characterised in that said step of placing said substrate (22) in said temperature controlled environment is followed by the step of allowing said substrate (22) to cool for a predetermined time period.

8. A method as claimed in claim 7 characterised in that said predetermined cool time period has a minimum duration equal to the time required for the thermal stresses in said substrate (22) to stabilise.

9. An apparatus for treating a flexible disc (22) provided with a coating composition to provide a finished article with improved thermal and hygroscopic stress and surface flatness properties, said apparatus being characterised by:

fixture assembly means (10; 102) having at least one pair of substantially identical clamping members (16; 111, 112), each clamping member (16; 111, 112) having at least one flatted peripheral clamping surface adapted to engage one side of the peripheral surface of said disc (22) in a substantially uniform manner when said disc (22) is arranged between the pair of said clamping members (16; 111, 112); and
means (17, 18, 31, 32; 114) for providing a clamping force in a direction substantially normal to said clamping surface.

10. Apparatus as claimed in claim 9 characterised in that said flexible disc (22) and said clamping members (16; 111, 112) have an annular shape of substantially identical diameter, and wherein said clamping surfaces comprise the peripheral side surfaces of said clamping members (16; 111, 112).

11. Apparatus as claimed in claim 9 or 10 characterised in that said peripheral clamping surface includes a layer (91) of low friction material adhered thereto.

12. Apparatus as claimed in claim 9, 10 or 11 characterised in that said clamping members are each provided with ventilation apertures (20) distributed therethrough.

13. Apparatus as claimed in claim 9, 10, 11 or 12 characterised in that said clamping force means (17, 18, 31, 32) includes a laterally spaced pair of end members (17, 18) flanking said clamping members (16), each end member (17, 18) having an inwardly facing thrust surface engaged with the juxtapositioned one of said clamping members (16), each end member (17, 18) further including a through bore, and a tension rod assembly (31, 32) received by said bore in each of said end members (17, 18).

14. Apparatus as claimed in claim 13 characterised in that said tension rod assembly (31, 32) includes rod means (31) having a first end releasably coupled to one (17) of said end members and a second end provided with a threaded portion (73), and a tensioning member (32) coupled to the other one (18) of said end members, said tensioning member (32) being threadably engaged with said threaded portion (73) of said rod means (31).

15. Apparatus as claimed in any of claims 9 to 14, further characterised by a support stand (12) for said fixture assembly (10), said stand (12) comprising a pair of laterally spaced end plates (14) and means (15) for coupling said end plates (14) together.

16. Apparatus as claimed in claim 15 characterised in that said coupling means (15) includes means for providing a support and alignment surface for said clamping members (16) and said disc (22).

17. Apparatus as claimed in claim 16 characterised in that said clamping members (16) and said discs (22) have an annular shape of substantially identical diameter, and wherein said support and alignment surface includes at least two points on a circle of diameter substantially equal to the diameter of said disc (22).

18. Apparatus as claimed in claim 15, 16 or 17, characterised in that said support stand (12) includes means (40 to 44) for rotating said fixture assembly means (10).

19. Apparatus as claimed in claim 18 characterised in that said fixture assembly means (10) is provided with a pair of circumferential grooves (25, 26) and wherein said rotating means (40 to 44) includes a plurality of rotatable support wheels (40 to 43) received within said grooves (25, 26).

20. Apparatus as claimed in claim 18 or 19, characterised in that said support stand further includes means (51) for providing an inwardly directed axial thrust to each end of said fixture assembly means (10).

21. Apparatus as claimed in any of claims 9 to 20 characterised by an oven (35) for receiving said fixture assembly (10), said oven including means (40 to 44) for rotating said fixture assembly (10).

22. Apparatus as claimed in claim 21 characterised in that said fixture assembly means (10) is provided with a pair of circumferential grooves (25, 26) and wherein said rotating means (40 to 44) includes a plurality of rotatable support wheels (40 to 43) received within said grooves, said oven (35) further including a motor means (44) coupled to one (40) of said support wheels.

23. Apparatus as claimed in claim 9 further characterised by a curing station (103) having a source (115, 116) of heat radiation, and transport means (101) for moving said fixture assembly (102) means through said curing station (103).

24. Apparatus as claimed in claim 23 characterised in that said transport means (101) comprises a rotatable support member for said fixture assembly means (102).

25. Apparatus as claimed in claim 23 or 24 further characterised by temperature sensing means (118) located adjacent said fixture assembly means (102) for monitoring the ambient temperature adjacent said disc (22).

26. A flexible recording disc (22) fabricated in accordance with the method of claims 1 to 8, characterised in that said recording disc has dynamic runout surface smoothness deviation no greater than substantially 0,127 mm (.050 in.).

## Revendications

1. Procédé de fabrication d'un disque souple muni d'un revêtement, caractérisé par les étapes consistant à:

a) serrer fermement un flan (22) d'un disque souple de façon sensiblement uniforme le long de sa périphérie, ledit flan (22) comprenant un substrat muni d'une composition de revêtement; et

b) laisser ledit flan (22) se polymériser jusqu'à l'état fini tout en le maintenant fermement serré.

2. Procédé selon la revendication 1, caractérisé en ce que ladite étape a) de serrage ferme du flan (22) comprend les étapes consistant à déterminer un montage (10; 102) comportant plusieurs organes de serrage (16; 111, 112), chacun présentant une surface de serrage plate, à insérer ledit substrat (22) entre une paire desdits organes de serrage (16; 111, 112), la périphérie dudit substrat (22) étant en alignement avec ladite surface de serrage plate, et à appliquer une force de serrage à l'ensemble constitué par ladite paire d'organes de serrage (16; 111, 112) et ledit substrat (22).

3. Procédé selon la revendication 2, caractérisé en ce que ladite étape consistant à prévoir un montage (10, 102) comprend l'étape consistant à incorporer une couche (91) d'un matériau à faible coefficient de friction sur ladite surface de serrage.

4. Procédé selon la revendication 2 ou 3, caractérisé en ce que ladite étape b) consistant à laisser ledit flan (22) se polymériser comprend l'étape consistant à placer ledit substrat (22) dans un environnement à température contrôlée pendant une période de temps prédéterminée pour polymériser ladite composition de revêtement.

5. Procédé selon la revendication 4, caractérisé en ce que ladite composition de revêtement comprend un mélange de polymères, et en ce que ladite période de temps a une durée minimale égale à la durée minimale nécessaire à la réticulation des polymères de ladite composition de revêtement.

6. Procédé selon la revendication 4 ou 5, caractérisé en ce que ladite étape b) consistant à laisser ledit flan (22) se polymériser comprend l'étape consistant à faire tourner ledit substrat (22) dans ledit environnement à température contrôlée et selon une vitesse prédéterminée.

7. Procédé selon la revendication 5 ou 6, caractérisé en ce que ladite étape consistant à placer ledit substrat (22) dans ledit environnement à température contrôlée est suivie par l'étape consistant à laisser ledit substrat (22) se refroidir pendant une période de temps prédéterminée.

8. Procédé selon la revendication 7, caractérisé en ce que ladite période de temps de refroidissement prédéterminée a une durée minimale égale à la durée nécessaire pour que les contraintes thermiques se stabilisent dans ledit substrat (22).

9. Appareil pour traiter un disque souple (22) muni d'une composition de revêtement pour obtenir un article fini à propriétés améliorées concernant les contraintes thermiques et hygroscopiques et la planéité de sa surface, ledit appareil étant caractérisé par:

des moyens de montage (10; 102) comprenant au moins une paire d'organes de serrage pratiquement identiques (16; 111, 112), chaque organe de serrage (16; 111, 112) comprenant au moins une surface de serrage périphérique plate apte à venir en engagement avec un côté de la surface périphérique dudit disque (22) d'une façon pratiquement uniforme lorsque ledit disque (22) est disposé entre la paire desdits organes de serrage (16; 111, 112); et

des moyens (17, 18, 31, 32; 114) pour déterminer une force de serrage dans une direction pratiquement perpendiculaire à ladite surface de serrage.

10. Appareil selon la revendication 9, caractérisé en ce que ledit disque souple (22) et lesdits organes de serrage (16; 111, 112) ont une forme annulaire avec un diamètre pratiquement identique, et en ce que lesdites surfaces de serrage comprennent les surfaces latérales périphériques desdits organes de serrage (16; 111, 112).

11. Appareil selon la revendication 9 ou 10, caractérisé en ce que ladite surface de serrage périphérique comprend une couche (91) d'un matériau à faible coefficient de friction qui adhère sur elle.

12. Appareil selon l'une des revendications 9, 10 ou 11, caractérisé en ce que lesdits organes de serrage sont chacun munis d'ouvertures de ventilation (20) réparties sur eux.

13. Appareil selon l'une quelconque des revendications 9, 10, 11 ou 12, caractérisé en ce que lesdits moyens à force de serrage (17, 18, 31, 32) comprennent une paire d'organes d'extrémité (17, 18) espacés latéralement et flanquant lesdits organes de serrage (16), chaque organe d'extrémité (17, 18) comprenant une surface de poussée tournée vers l'intérieur et en engagement avec l'un desdits organes de serrage juxtaposés (16), chaque organe d'extrémité (17, 18) comportant en outre un alésage traversant, et un ensemble à tige de tension (31, 32) reçu dans ledit alésage de chacun desdits organes d'extrémité (17, 18).

14. Appareil selon la revendication 13, caractérisé en ce que ledit ensemble à tige de tension (31, 32) comprend une tige (31) comportant une première extrémité accouplée de façon amovible à l'un (17) desdits organes d'extrémité et une seconde extrémité munie d'une partie filetée (73), et un organe tendeur (32) couplé à l'autre (18) desdits organes d'extrémité, ledit organe tendeur (32) étant en engagement par vissage avec ladite partie filetée (73) de ladite tige (31).

15. Appareil selon l'une quelconque des revendications 9 à 14, caractérisé en outre par un bâti de support (12) destiné audit montage (10), ledit bâti (12) comprenant une paire de plaques d'extrémité (14) espacées latéralement et des moyens (15) pour accoupler lesdites plaques d'extrémité (14) l'une à l'autre.

16. Appareil selon la revendication 15, caractérisé en ce que lesdits moyens d'accouplement (15) comprennent des moyens pour constituer une surface de support et d'alignement pour lesdits organes de serrage (16) et lesdits disques (22).

17. Appareil selon la revendication 16, caractérisé en ce que lesdits organes de serrage (16) et lesdits disques (22) ont une forme annulaire de diamètre pratiquement identique, et en ce que ledit support et la surface d'alignement comprennent au moins deux points sur un cercle de diamètre pratiquement égal au diamètre dudit disque (22).

18. Appareil selon la revendication 15, 16 ou 17, caractérisé en ce que ledit bâti (12) de support comprend des moyens (40 à 44) pour faire tourner lesdits moyens de montage (10).

19. Appareil selon la revendication 18, caractérisé en ce que lesdits moyens de montage (10) comprennent deux gorges circonférentielles (25, 26) et en ce que lesdits moyens d'entraînement en rotation (40 à 44) comprennent plusieurs roues de support rotatives (40 à 43) passant dans lesdites gorges (25, 26).

20. Appareil selon la revendication 18 ou 19, caractérisé en ce que ledit bâti de support comprend en outre des moyens (51) pour déterminer une poussée axiale dirigée vers l'intérieur à chaque extrémité desdits moyens de montage (10).

21. Appareil selon l'une quelconque des revendications 9 à 20, caractérisé par un four (35) destiné à recevoir ledit montage (10), ce four comprenant des moyens (40, à 44) pour faire tourner lesdits moyens de montage (10).

22. Appareil selon la revendication 21, caractérisé en ce que ledit montage (10) est muni de deux gorges circonférentielles (25, 26) et en ce que lesdits moyens d'entraînement en rotation (40 à 44) comprennent plusieurs roues de support rotatives (40 à 43) passant à l'intérieur desdites gorges, le four (35) comportant en outre un moyen moteur (44) accouplé à l'une (40) desdites roues de support.

23. Appareil selon la revendication 9, caractérisé en ce qu'il comprend en outre un poste de polymérisation (103) comportant une source (115, 116) de radiations thermiques, et des moyens transporteurs (101) pour faire passer ledit montage (102) par le poste de polymérisation (103).

24. Appareil selon la revendication 23, caractérisé en ce que lesdits moyens transporteurs (101) comprennent un organe de support rotatif destiné auxdits moyens de montage (102).

25. Appareil selon la revendication 23 ou 24, caractérisé en outre par un dispositif de détection de température (118) disposé dans un endroit adjacent auxdits moyens de montage (102) pour surveiller la température ambiante dans la zone adjacente au disque (22).

26. Disque d'enregistrement souple (22) fabriqué selon le procédé des revendications 1 à 8, caractérisé par une planéité de surface dont les déviations par décalage dynamique ne dépassent pas pratiquement 0,127 mm (0,005 pouce).

## Patentansprüche

1. Verfahren zur Herstellung einer flexiblen beschichteten Platte, gekennzeichnet, durch die Schritte:

a) sicheres Einspannen eines flexiblen Plattenrohlings (22) im wesentlichen gleichmäßig längs dessen Umfang, wobei der Rohling (22) ein mit einer Beschichtungsmasse versehenes flexibles Substrat aufweist, und

b) Härtenlassen des Rohlings (22) in einen fertigen Zustand, während der Rohling (22) sicher eingespannt gehalten wird.

2. Verfahren nach Anspruch 1, dadurch gekennzeichnet, daß der Schritt (a) des sicheren Einspannens des Rohlings (22) die folgenden Schritte umfaßt: Vorsehen einer Spannvorrichtung (10; 102) mit einer Vielzahl von Einspannelementen (16; 111, 112), deren jedes eine geglättete Spannfläche aufweist, Einfügen des Substrats (22) zwischen ein Paar der Einspannelemente (16; 111, 112), wobei der Rand des Substrats (22) mi der geglätteten Spannfläche fluchtet, sowie Aufbringen einer Spannkraft auf die das Paar von Einspannelementen (16; 111, 112) und das Substrat (22) umfassende Anordnung.

3. Verfahren nach Anspruch 2, dadurch gekennzeichnet, daß der Schritt des Vorsehens einer Spannvorrichtung (10; 102) den Schritt des Einbringens einer Schicht (91) aus einem Material niedriger Reibung auf die Spannfläche umfaßt.

4. Verfahren nach Anspruch 2 oder 3, dadurch gekennzeichnet, daß der Schritt (b) des Härtenlassens des Rohlings (22) den Schritt des Einbringens des Substrats (22) in eine temperaturgesteuerte Umgebung über eine vorgegebene Zeitspanne umfaßt, um die Beschichtungsmasse zu härten.

5. Verfahren nach Anspruch 4, dadurch gekennzeichnet, daß die Beschichtungsmasse ein Polymergemisch umfaßt, und daß die Zeitspanne eine Mindestdauer hat, die gleich derjenigen Mindestzeit ist, die zum Vernetzen der Polymere in der Beschichtungsmasse erforderlich ist.

6. Verfahren nach Anspruch 4 oder 5, dadurch gekennzeichnet, daß der Schritt (b) des Härtenlassens des Rohlings (22) den Schritt des Drehens des Substrats (22) in der temperaturgesteuerten Umgebung mit vorgegebener Geschwindigkeit umfaßt.

7. Verfahren nach Anspruch 5 oder 6, dadurch gekennzeichnet, daß auf den Schritt des Einbringens des Substrats (22) in die temperaturgesteuerte Umgebung der Schritt des Kühlenlassens des Substrats (22) für eine vorgegebene Zeitspanne folgt.

8. Verfahren nach Anspruch 7, dadurch gekennzeichnet, daß die vorgegebene Kühlzeitspanne eine Mindestdauer hat, die gleich ist der Zeit, die für die Stabilisierung der Wärmespannungen in dem Substrat (22) erforderlich ist.

9. Vorrichtung zum Behandeln einer mit einer Beschichtungsmasse versehenen flexiblen Platte (22) zur Vermittlung eines fertigen Gegenstands mit verbesserten Eigenschaften bezüglich thermischen und hygroskopischen Spannungen sowie bezüglich Oberflächenglätte, gekennzeichnet durch

eine Spannvorrichtung (10; 102) mit mindestens einem Paar von im wesentlichen identischen Einspannelementen (16; 111, 112), wobei jedes Einspannelement (16; 111, 112) mindestens eine geglättete Umfangs-Spannfläche aufweist, die geeignet ist, an einer Seite der Umfangsfläche der Platte (22) in im wesentlichen gleichförmiger Weise anzugreifen, wenn die Platte (22) zwischen dem Paar von Einspannelementen (16; 111, 112) angeordnet ist; und

eine Einrichtung (17, 18, 31, 32; 114) zum Aufbringen einer Spannkraft in einer zu der Spannfläche im wesentlichen senkrechten Richtung.

10. Vorrichtung nach Anspruch 9, dadurch gekennzeichnet, daß die flexible Platte (92) und die Einspannelemente (16; 111, 112) eine Ringform mit im wesentlichen identischem Durchmesser aufweisen, wobei die Spannflächen die Umfangs-Seitenflächen der Einspannelemente (16; 111, 112) umfassen.

11. Vorrichtung nach Anspruch 9 oder 10, dadurch gekennzeichnet, daß die Umfangs-Spannfläche eine daran haftende Schicht (91) aus einem Material niedriger Reibung aufweist.

12. Vorrichtung nach Anspruch 9, 10 oder 11, dadurch gekennzeichnet, daß die Einspannelemente jeweils mit darüber verteilten Lüftungsöffnungen (20) versehen sind.

13. Vorrichtung nach Anspruch 9, 10, 11 oder 12, dadurch gekennzeichnet, daß die Spannkraft-Einrichtung (17, 18, 31, 32) ein Paar von in seitlichem Abstand angeordneten, die Einspannelemente (16) flankierenden Stirnelementen (17, 18) umfaßt, wobei jedes Stirnelement (17, 18) eine nach innen weisende Axialdruckfläche aufweist, die mit dem benachbarten Einspannelement (16) in Eingriff steht, wobei jedes Stirnglied (17, 18) ferner eine Durchgangsbohrung aufweist, und wobei in der Bohrung in jedem der Stirnglieder (17, 18) eine Zugstangenanordnung (31, 32) aufgenommen ist.

14. Vorrichtung nach Anspruch 13, dadurch gekennzeichnet, daß die Zugstangen-Anordnung (31, 32) eine Stangeneinrichtung (31) mit einem ersten Ende, das mit einem (17) der Stirnglieder lösbar gekuppelt ist, und einem mit einem Gewindeabschnitt (73) versehenen zweiten Ende sowie ein mit dem anderen (18) der Stirnglieder gekuppeltes Spannelement (32) enthält, wobei das Spannelement (32) mit dem Gewindeabschnitt (73) der Stangeneinrichtung (31) in Gewindeeingriff steht.

15. Vorrichtung nach einem der Ansprüche 9 bis 14, gekennzeichnet durch ein Traggestell (12) für die Spannvorrichtung (10), wobei das Gestell (12) ein Paar von in seitlichem Abstand angeordneten Stirnplatten (14) und eine Einrichtung (15) zum Zusammenkuppeln der Stirnplatten (14) enthält.

16. Vorrichtung nach Anspruch 15, dadurch gekennzeichnet, daß die Kupplungseinrichtung (15) eine Einrichtung aufweist, die eine Unterstützungs- und Ausrichtungsfläche für die Einspannelemente (16) und die Platte (22) vermittelt.

17. Vorrichtung nach Anspruch 16, dadurch gekennzeichnet, daß die Einspannelemente (16) und die Platten (22) eine Ringform mit im wesentlichen identischem Durchmesser aufweisen, wobei die Unterstützungs- und Ausrichtungsfläche mindestens zwei Punkte auf einem Kreis aufweist, dessen Durchmesser im wesentlichen gleich ist dem Durchmesser der Platte (22).

18. Vorrichtung nach Anspruch 15, 16 oder 17, dadurch gekennzeichnet, daß das Traggestell (12) eine Einrichtung (40 bis 44) zum Drehen der Spannvorrichtung (10) aufweist.

19. Vorrichtung nach Anspruch 18, dadurch gekennzeichnet, daß die Spannvorrichtung (10) mit einem Paar von Umfangsnuten (25, 26) versehen ist, wobei die Dreheinrichtung (40 bis 44) eine Vielzahl von in die Nuten (25, 26) eingreifenden drehbaren Stützrädern (40 bis 43) aufweist.

20. Vorrichtung nach Anspruch 18 oder 19, dadurch gekennzeichnet, daß das Traggestell ferner eine Einrichtung (51) aufweist, die auf eine Stirnseite der Spannvorrichtung (10) eine nach innen gerichtete axiale Schubkraft ausübt.

21. Vorrichtung nach einem der Ansprüche 9 bis 20, gekennzeichnet durch einen Ofen (35) zur Aufnahme der Spannvorrichtung (10), wobei der Ofen eine Einrichtung (40 bis 44) zum Drehen der Spannvorrichtung (10) aufweist.

22. Vorrichtung nach Anspruch 21, dadurch gekennzeichnet, daß die Spannvorrichtung (10) mit einem Paar von Umfangsnuten (25, 26) versehen ist, wobei die Dreheinrichtung (40 bis 44) eine Vielzahl von in die Nuten eingreifenden drehbaren Stützrädern (40 bis 44) aufweist, und wobei der Ofen (35) ferner eine mit einem (40) der Stützräder gekuppelte Motoreinrichtung (44) umfaßt.

23. Vorrichtung nach Anspruch 9, gekennzeichnet durch eine Härtungsstation (103) mit einer Wärmestrahlungsquelle (115, 116) sowie eine Transporteinrichtung (101), um die Spannvorrichtung (102) durch die Härtungsstation (103) hindruch zu bewegen.

24. Vorrichtung nach Anspruch 23, dadurch gekennzeichnet, daß die Transporteinrichtung (101) ein drehbares Stützelement für die Spannvorrichtung (102) umfaßt.

25. Vorrichtung nach Anspruch 23 oder 24, gekennzeichnet durch eine nahe der Spannvorrichtung (102) angeordnete Temperaturfühleinrichtung (118) zur Überwachung der Umgebungstempereatur in der Nähe der Platte (22).

26. Flexible Aufzeichnungsplatte (22) hergestellt nach dem Verfahren der Ansprüche 1 bis 8, dadurch gekennzeichnet, daß die Aufzeichungsplatte eine dynamische Unrundheitsabweichung der Oberflächenglätte von nicht mehr als im wesentlichen 0,127 mm (0,005 Zoll) hat.

```
┌──────────────┐
│   COAT DISC  │
└──────┬───────┘
       ↓
┌──────────────┐
│   PRE - CURE │
└──────┬───────┘
       ↓
┌──────────────┐
│   CLAMP  IN  │
│   FIXTURE    │
└──────┬───────┘
       ↓
┌──────────────┐
│  HEAT  CURE  │
└──────┬───────┘
       ↓
┌──────────────┐
│     COOL     │
└──────┬───────┘
       ↓
┌──────────────┐
│ REMOVE DISCS │
│ FROM FIXTURE │
└──────┬───────┘
       ↓
┌──────────────┐
│   FURTHER    │
│  PROCESSING  │
└──────────────┘
```

*FIG.—1.*

*FIG.—6.*

FIG.—2.

FIG._3.

FIG.__4.

0 030 858

FIG._5.

0 030 858

FIG._9.

FIG._8.

FIG._7.

6

FIG._10.

FIG._11.